# EUROPÄISCHE PATENTANMELDUNG

(11) **EP 2 955 287 A1**
(43) Veröffentlichungstag der Anmeldung: **16.12.2015**
(21) Anmeldenummer: 15020077.2
(22) Anmeldetag: 26.05.2015
(51) Int. Cl.: E03C 1/02, E03C 1/04, E03C 1/042

(54) **ANSCHLUSSVORRICHTUNG UND DEREN VERWENDUNG FÜR EINE SANITÄRE ANLAGE**

(30) Priorität: 10.06.2014 DE 202014004623 U; 09.07.2014 DE 202014005585 U; 06.08.2014 DE 202014006320 U
(71) Anmelder: Schulte Duschkabinenbau GmbH & Co. KG, 59846 Sundern (DE)
(72) Erfinder: Heupel, Norbert, 59872 Meschede (DE); Rohe, Tobias, 58706 Menden (DE); Haude, Florian, 59872 Meschede (DE)
(74) Vertreter: Von Rohr Patentanwälte Partnerschaft mbB

(57) **Zusammenfassung**

Es werden eine Anschlussvorrichtung und deren Verwendung zum Anschluss einer sanitären Anlage an eine Rohrleitung 3 vorgeschlagen. Die Anschlussvorrichtung weist eine Anschlusseinheit auf, die einen Einlassstutzen 2a zum Anschluss an die Rohrleitung und einen Auslassstutzen 2b zum Anschluss an eine Armatur 4 aufweist. Der Einlassstutzen ist über ein Verbindungsstück 2c mit dem Auslassstutzen verbunden und versetzt. Die Anschlussvorrichtung weist einen Adapter auf, der an der Anschlusseinheit zur Anpassung des Abstandes der Armatur zur Rohrleitung axial verstellbar angebracht oder anbringbar ist.

## Beschreibung

Die vorliegende Erfindung betrifft eine Anschlussvorrichtung zum Anschluss einer Armatur an eine Rohrleitung gemäß dem Oberbegriff des Anspruchs 1 sowie deren Verwendung für eine sanitäre Anlage gemäß dem Oberbegriff des Anspruchs 17.

Unter dem Begriff "Anschlussvorrichtung" ist bei der vorliegenden Erfindung insbesondere ein S-Anschluss für Armaturen sanitärer Anlagen, beispielsweise für Mischbatterien, Wasserhähne o. dgl., zu verstehen. Anschlussvorrichtungen verbinden insbesondere Armaturen mit Rohrleitungen bzw. Rohrmündungen. Vorzugsweise besteht eine Anschlussvorrichtung aus einer Anschlusseinheit, die einen Einlassstutzen zum Anschluss der Anschlussvorrichtung an die Rohrleitung und einen Auslassstutzen zum Anschluss der Anschlussvorrichtung an die Armatur aufweist. Insbesondere bei S-Anschlüssen ist der Einlassstutzen zum Auslassstutzen achsparallel, vorzugsweise um 7,5 mm, versetzt bzw. exzentrisch angeordnet. Anschlussvorrichtungen werden insbesondere als Gewindeanschlüsse oder Steckanschlüsse ausgeführt.

Unter dem Begriff "Rohrleitung" sind bei der vorliegenden Erfindung insbesondere alle Bauelemente zu verstehen, die dem Transport von Fluiden, wie Gasen, Flüssigkeiten oder Suspensionen, dienen. Rohrleitungen sind nach diesem Verständnis insbesondere Rohre, Rohrmündungen, Armaturen sowie Verbindungselemente, wie Flansche, Fittinge, Verschraubungen, Muffen oder Nippel. Rohrleitungen sind damit insbesondere auch Leitungen, die den Wasserzulauf, insbesondere den Warm- bzw. Kaltwasseranschluss, sanitärer Anlagen gewährleisten bzw. bereitstellen.

Üblicherweise liegen die Fittinge bzw. Rohrmündungen der Rohrleitungen für sanitäre Anlagen innerhalb des Mauerwerks oder der Wand bzw. unter dem Putz oder den Wandfliesen. Rohrleitungen können jedoch auch bündig mit der Oberfläche des Mauerwerks oder der Wand enden oder über diese hinaus in einen Raum ragen.

Unter dem Begriff "sanitäre Anlagen" sind alle technischen Installationen für die Wasserversorgung und die Abwasserentsorgung zu verstehen. Insbesondere umfasst der Begriff auch alle Sanitärkeramiken, wie Bidets, Toiletten, Urinale oder Waschbecken mit zugehörigen Armaturen und/oder Rohrleitungen.

Die Wasserversorgung vieler sanitärer Anlagen erfolgt üblicherweise mit einer Rohrleitung für die Zufuhr von warmem bzw. heißem Wasser und/oder mit einer Rohrleitung für die Zufuhr von kaltem Wasser. Das warme und/oder kalte Wasser wird anschließend in einer Armatur, insbesondere in einer Mischbatterie, dosiert und/oder vermischt.

Da der Abstand der Rohrleitung für den Warmwasseranschluss zu der Rohrleitung für den Kaltwasseranschluss - üblicherweise 150 mm - nicht oder nicht immer genau dem Abstand der zugehörigen Anschlüsse der Armatur, insbesondere Mischbatterie, entspricht, die Armatur zu einer einzelnen Rohrleitung versetzt installiert werden soll und/oder die Rohrleitungen zueinander einen radialen, insbesondere horizontalen, Versatz aufweisen und/oder nicht parallel verlaufen, kommen Anschlussvorrichtungen, wie S-Anschlüsse, zum Einsatz, die solche Ungenauigkeiten, Unterschiede oder Abweichungen bei oder in der Anordnung ausgleichen bzw. kompensieren.

Die zwei Rohrleitungen bzw. zugehörigen Rohrmündungen, an die die Armatur angeschlossen werden soll, weisen häufig darüber hinaus auch einen axialen Versatz auf. So bildet die durch die beiden Rohrmündungen gebildete Gerade häufig keine Parallele zu der Oberfläche, insbesondere den Wandfliesen bzw. dem Putz, an die bzw. an den die Armatur befestigt werden soll oder angrenzt. Ferner kann auch eine einzelne Rohrleitung bzw. die zugehörige Rohrmündung zu weit oder zu kurz aus einer Oberfläche hinausragen. In beiden Fällen kann eine angeschlossene bzw. anzuschließende Armatur nicht immer bündig zu der Oberfläche installiert werden.

Heutige S-Anschlüsse zum Anschluss einer Armatur an eine Rohrleitung können einen axialen Versatz jedoch gar nicht oder nur sehr eingeschränkt ausgleichen. So ist der Ausgleich eines axialen Versatzes nur durch Verschrauben der gesamten Anschlussvorrichtung möglich. Eine Anpassung des Abstandes der Armatur zur Rohrleitung ist nicht unabhängig vom vorgegebenen Versatz der Rohrleitungen zueinander und/oder zu der Armatur durchzuführen. Die Anpassung des Abstandes der Armatur zur Rohrleitung ist bei gleichbleibender Lage der Armatur sowie der Rohrleitung folglich nur durch eine vollständige Umdrehung der Anschlussvorrichtung möglich. Diese Einschränkung sowie die in den meisten Fällen daraus resultierende Undichtigkeit bzw. Leckage der Verbindung zwischen Armatur und Rohrleitung mittels einer üblichen Anschlussvorrichtung führen in der Praxis zu einer äußerst schwierigen Handhabung der Anschlussvorrichtungen zum Anschluss einer Armatur an eine Rohrleitung.

Die DT 24 12 767 A1 offenbart einen Unterputz-S-Anschluss für sanitäre Mischbatterien und Armaturen zum Anschluss an einem unter Putz liegenden Fitting und an Mischbatterien, wobei an dem Unterputz-S-Anschluss ein Stutzen zum Anschluss an einem unter Putz liegenden Fitting mit einem zu diesem anschließenden exzentrischen verlängerten Schenkel zum Verbinden einer Überwurfmutter an eine Mischbatterie angeordnet ist. Nach Anschluss des Stutzens an dem unter Putz liegenden Fitting wird der verlängerte Schenkel auf das Höhenmaß einer Wandrosette und das Tiefenmaß der Überwurfmutter abgetrennt. Die Anpassung des Abstandes der Armatur zur Rohrleitung mit dem Unterputz-S-Anschluss erfolgt beispielsweise mit einer elektrischen Trennscheibe und ist deshalb mit einem großen maschinellen Aufwand verbunden. Abgesehen von der Tatsache, dass nicht jeder Anwender eine solche elektrische Trennscheibe zur Verfügung stehen hat, ist die Anwendung einer solchen Maschine oder auch einer Handsäge stets mit gesundheitlichen Gefahren, Lärm, Verschmutzung und Kosten verbunden. Darüber hinaus kann bei fehlerhafter Kürzung des Stutzens dieser gar nicht oder nur unter sehr großem Aufwand wieder repariert oder verlängert werden.

Der vorliegenden Erfindung liegt die Aufgabe zugrunde, eine Anschlussvorrichtung sowie eine Verwendung anzugeben, die einen einfachen und/oder kostengünstigen Aufbau und/oder eine sichere, insbesondere leckagefreie, einfache, intuitive, flexible, mehrfache und/oder stufenlose Anpassung des Abstandes der Armatur zur Rohrleitung ermöglicht oder unterstützt.

Die obige Aufgabe wird durch eine Anschlussvorrichtung gemäß Anspruch 1 oder durch eine Verwendung gemäß Anspruch 15 gelöst. Vorteilhafte Weiterbildungen sind Gegenstand der Unteransprüche.

Ein Aspekt der vorliegenden Erfindung liegt darin, dass die Anschlussvorrichtung einen Adapter bzw. Reduzierstück aufweist, der bzw. das an die Anschlusseinheit zur Anpassung des Abstandes der Armatur zur Rohrleitung axial verstellbar angebracht oder anbringbar ist. Dies ermöglicht, dass vorzugsweise unabhängig von der radialen Ausrichtung der Anschlussvorrichtung der Abstand der Armatur zur Rohrleitung axial - vorzugsweise beliebig bzw. stufenlos - angepasst werden kann. Alternativ oder zusätzlich ist der Adapter form- und/oder kraft- und/oder stoffflüssig, insbesondere durch Verschrauben, mit der Anschlusseinheit, insbesondere mit dem Einlass- oder dem Auslassstutzen, verbunden oder verbindbar. Dies gestattet eine sehr einfache, kompakte und für den Nutzer leicht verständliche Benutzung der Anschlussvorrichtung sowie eine vorzugsweise stufenlose Anpassung des Abstandes der Armatur zur Rohrleitung.

Vorzugsweise weist der Adapter ein Innen- oder Außengewinde zur Verbindung mit der Anschlusseinheit auf. Wenn der Adapter ein Außengewinde zur Verbindung mit der Anschlusseinheit aufweist, kann der Adapter also in die Anschlusseinheit hineingeschraubt werden. Dies ermöglicht eine äußerst kompakte Bauweise, die bei wenig Bauraum von großem Nutzen ist. Wenn der Adapter ein Innengewinde zur Verbindung mit der Anschlusseinheit aufweist, ermöglicht dies einen sehr großen Verstellbereich des Adapters, in welchem der Abstand der Armatur zur Rohrleitung angepasst werden kann.

In einer besonders bevorzugten Variante ist der Adapter gegen ein axiales Verstellen, Setzen oder Kriechen mit einer Sicherung, insbesondere mit einer Mutter, besonders bevorzugt mit einer Kontermutter, selbsthemmenden Mutter oder Kronenmutter, gesichert oder sicherbar. So kann der Nutzer der Anschlussvorrichtung den Abstand der Armatur zur Rohrleitung mittels des Adapters insbesondere entsprechend seiner Bedürfnisse zunächst anpassen und anschließend den Adapter gegen ein axiales Verstellen sichern. Dies gewährleistet, dass der Einbau bzw. Anschluss der Anschlussvorrichtung an die Armatur bzw. an die Rohrleitung ohne axiales Verstellen bzw. Lösen des vorzugsweise zuvor justierten Adapters durchgeführt werden kann. Darüber hinaus verhindert die Sicherung, dass sich der Adapter während des Betriebs der sanitären Anlage kurzfristig durch ein mögliches Setzen der Verbindung und/oder mittel- bzw. langfristig durch ein mögliches Kriechen der Verbindung lockert oder löst.

Vorzugsweise ist zwischen dem Adapter und der Anschlusseinheit und/oder zwischen der Anschlussvorrichtung und der Armatur bzw. der Rohrleitung eine Dichtung, insbesondere ein Dichtring oder ein Gewindedichtring, angebracht oder anbringbar. Die Dichtung gewährleistet, dass trotz der Möglichkeit, den Abstand der Armatur zur Rohrleitung axial zu verstellen bzw. anzupassen, kein Fluid an den Verbindungsstellen bzw. Übergängen der Bauteile austreten kann und auch ein langfristig sicherer bzw. leckagefreier Betrieb der sanitären Anlage gewährleistet ist. Alternativ oder zusätzlich kann insbesondere auch ein Dichtungsband oder Dichtungshanf verwendet werden.

Besonders bevorzugt weist die Anschlussvorrichtung auf der äußeren Seite des Adapters, der Sicherung und/oder der Anschlusseinheit insbesondere zur Montage bzw. Demontage und/oder zur Justierung der Anschlussvorrichtung eine oder mehrere Schlüsselflächen für ein Werkzeug, insbesondere für einen Schraubenschlüssel o. dgl., auf. Durch die Schlüsselfläche kann die Anschlussvorrichtung, insbesondere der Adapter der Anschlussvorrichtung, sehr einfach montiert bzw. demontiert werden und/oder die Justierung bzw. Anpassung des Abstandes der Armatur zur Rohrleitung erfolgen.

Vorzugsweise variiert der Innen- oder Außendurchmesser des Adapters insbesondere zur optionalen Verbindung mit Rohrleitungen bzw. Armaturen, die unterschiedliche Innen- bzw. Außendurchmesser aufweisen, über die Länge des Adapters. Dadurch ist es möglich, denselben Adapter der Anschlussvorrichtung für verschiedene Rohrleitungen bzw. Armaturen zu verwenden ohne weitere bauliche Maßnahmen ergreifen oder einen anderen Adapter verwenden zu müssen. Auf diese Weise ist die Anschlussvorrichtung äußerst flexibel für verschiedene sanitäre Anlagen und/oder Armaturen bzw. Rohrleitungen einsetzbar bzw. verbindbar.

Eine vorschlagsgemäße Verwendung der vorschlagsgemäßen Anschlussvorrichtungen betrifft eine sanitäre Anlage mit einer Armatur, insbesondere Mischbatterie, sowie zwei Rohrleitungen, wobei die Armatur über die Anschlussvorrichtungen an die Rohrleitungen angeschlossen oder anschließbar ist. So können entsprechende Vorteile erreicht werden.

Zusätzliche Vorteile, Merkmale, Eigenschaften und Aspekte der vorliegenden Erfindung ergeben sich aus den Ansprüchen und der folgenden Beschreibung bevorzugter Ausführungsformen der Anschlussvorrichtung anhand der Zeichnung. Es zeigt:
- Fig. 1: einen schematischen Schnitt einer vorschlagsgemäßen Anschlussvorrichtung mit einem Adapter in einer Position zur Verlängerung des Abstandes der ansatzweise dargestellten Armatur zur in der Wand geführten Rohrleitung gemäß einer ersten Ausführungsform;
- Fig. 2: eine perspektivische Ansicht der Anschlussvorrichtung gemäß Fig. 1 mit dem Adapter in einer neutralen Position ohne zugeordnete Armatur sowie ohne Rohrleitung;
- Fig. 3: einen schematischen Schnitt der Anschlussvorrichtung gemäß Fig. 2 mit zugeordneter Armatur sowie in der Wand geführten Rohrleitung;
- Fig. 4: einen schematischen Schnitt einer vorschlagsgemäßen Anschlussvorrichtung mit einem zweistufigen Adapter in einer Position zur Verlängerung des Abstandes der nur ansatzweise dargestellten Armatur zur in der Wand geführten Rohrleitung gemäß einer zweiten Ausführungsform;
- Fig. 5: einen schematischen Schnitt einer vorschlagsgemäßen Anschlussvorrichtung mit einem Adapter zur Verlängerung des Abstandes der nur ansatzweise dargestellten Armatur zur in der Wand geführten Rohrleitung gemäß einer dritten Ausführungsform; und
- Fig. 6: einen schematischen Schnitt einer vorschlagsgemäßen sanitären Anlage mit einer Armatur, zwei vorschlagsgemäßen Anschlussvorrichtungen sowie zwei Rohrleitungen.

In den teilweise nicht maßstabsgerechten, nur schematischen Figuren werden für gleiche oder ähnliche Teile dieselben Bezugszeichen verwendet, wobei entsprechende oder vergleichbare Eigenschaften und Vorteile erreicht werden, auch wenn eine wiederholte Beschreibung weggelassen ist.

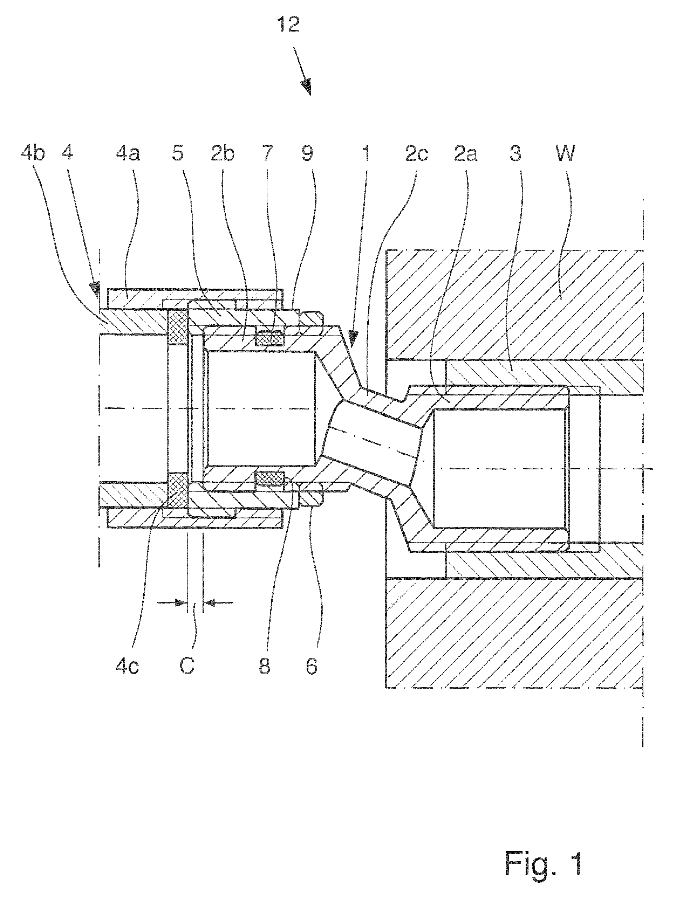

Die in Fig. 1 dargestellte Anschlussvorrichtung 1 weist vorzugsweise eine Anschlusseinheit 2, die einen Einlassstutzen 2a zum Anschluss an eine Rohrleitung 3 und einen Auslassstutzen 2b zum Anschluss an eine Armatur 4 aufweist, wobei ein Verbindungsstück 2c den Einlassstutzen 2a vorzugsweise starr mit dem Auslassstutzen 2b verbindet, und einen Adapter 5 auf, der an der Anschlusseinheit 2, insbesondere an dem Auslassstutzen 2b, zur Anpassung des Abstandes der Armatur 4 zur Rohrleitung 3 axial verstellbar angebracht oder anbringbar ist.

Der Einlassstutzen 2a, der Auslassstutzen 2b, das Verbindungsstück 2c sowie der Adapter 5 weisen eine Geometrie, insbesondere zumindest im Wesentlichen die eines Hohlzylinders, auf, die zumindest im Wesentlichen durch einen Innendurchmesser, Außendurchmesser und eine Höhe bzw. Länge definiert ist. Die Geometrie der genannten Teile kann unterschiedlich oder gleich sein.

Der Adapter 5 ist form- und/oder kraft- und/oder stoffschlüssig, insbesondere durch Verschrauben, mit der Anschlusseinheit 2, insbesondere mit dem Auslassstutzen 2b, verbunden oder verbindbar.

Der Adapter 5 ist relativ zur Rohrleitung 3 bzw. zur Armatur 4 sowie zu der Anschlusseinheit 2 axial, insbesondere durch Verschrauben, bewegbar oder verstellbar. So kann insbesondere der Auslassstutzen 2b durch den Adapter 5 derart um eine Länge C, maximal jedoch um nahezu die gesamte Länge des Adapters 5, vorzugsweise um mehr als 10 %, besonders bevorzugt um mehr als 20 %, insbesondere um mehr als 50 % der Länge des Adapters 5 oder Auslassstutzens 2b, verlängert werden, dass der Abstand zwischen Rohrleitung 3 und Armatur 4 vorzugsweise vergrößert wird.

Die folgenden Erläuterungen zu der vorschlagsgemäßen Anschlussvorrichtung 1 beziehen sich ausschließlich auf mögliche Ausführungsformen, bei denen der Adapter 5 mit dem Auslassstutzen 2b verbunden oder verbindbar ist.

Fig. 1 zeigt einen schematischen Schnitt einer vorschlagsgemäßen Anschlussvorrichtung 1 mit dem Adapter 5 in einer Position zur axialen Verlängerung des Auslassstutzens 2b um die Länge C gemäß einer ersten Ausführungsform.

Bei dieser Ausführungsform ist der Einlassstutzen 2a, der Auslassstutzen 2b und das Verbindungsstück 2c vorzugsweise einstückig ausgebildet oder bilden eine Baueinheit. Es sind jedoch auch andere konstruktive Lösungen möglich.

Die dargestellte Rohrleitung 3 bzw. die zugehörige Rohrmündung endet innerhalb der Wand W. Es sind jedoch auch andere konstruktive Lösungen möglich, bei denen die Rohrleitung 3 bündig mit der Oberfläche der Wand W endet oder über diese hinaus in Richtung der Armatur 4 ragt. Alternativ ist die Rohrleitung 3 zusammen mit der gesamten Anschlussvorrichtung 1 in der Wand W versenkt bzw. eingelassen.

Bei der gezeigten Ausführungsform ist der Adapter 5 vorzugsweise durch Verschrauben mit dem Auslassstutzen 2b sowie der Armatur 4 verbunden. Der Adapter 5 weist für diesen Zweck innen ein Innengewinde bzw. außen ein Außengewinde für die Verbindung mit dem Auslassstutzen 2b bzw. der Armatur 4 auf. Es sind jedoch auch andere konstruktive Lösungen möglich, bei denen das Innengewinde für die Verbindung mit der Armatur 4 und das Außengewinde für die Verbindung mit dem Auslassstutzen 2b ausgebildet sind oder bei denen der Adapter 5 ausschließlich über ein Innengewinde oder ein Außengewinde sowohl mit der Armatur 4 als auch mit dem Auslassstutzen 2b verbunden oder verbindbar ist.

Bei der dargestellten Ausführungsform ist der Auslassstutzen 2b vorzugsweise mit einem im Wesentlichen durchgängigen Außengewinde zur Verbindung mit dem Adapter 5 und der Einlassstutzen 2a mit einem durchgängigen Außengewinde zur Verbindung mit der Rohrleitung 3 ausgebildet.

Der Einlassstutzen 2a zur Verbindung mit der Rohrleitung 3 sowie der mit dem Auslassstutzen 2b verbundene Adapter 5 zur Verbindung mit der Armatur 4 sind folglich in der dargestellten Ausführungsform als Nippel ausgebildet. Es sind jedoch auch andere konstruktive Lösungen möglich, bei denen die genannten Bauelemente vorzugsweise als Nippel oder als Muffe ausgebildet sind.

Vorzugsweise ist die Anschlussvorrichtung 1, insbesondere der Auslassstutzen 2b bzw. der Adapter 5 form- und/oder kraft- und/oder stoffschlüssig, insbesondere durch Verschrauben, mit der Armatur 4 bzw. einem Verbindungselement der Armatur 4, wie eine Überwurfmutter 4a, verbunden oder verbindbar.

Besonders bevorzugt ist die Überwurfmutter 4a form- und/oder kraftschlüssig mit einem Anschlussstück 4b der Armatur 4 verbunden oder verbindbar, wobei eine Dichtung 4c der Armatur 4 vorzugsweise derart zwischen der Armatur 4, insbesondere dem Anschlussstück 4b und/oder der Überwurfmutter 4a, und der Anschlussvorrichtung 1, insbesondere dem Auslassstutzen 2b und/oder dem Adapter 5, angrenzt oder lagert, dass kein Fluid an den Verbindungsstellen bzw. Übergängen der Bauteile austreten kann.

Der Adapter 5 ist bei der dargestellten Ausführungsform insbesondere gegen ein axiales Verstellen in Richtung der Armatur 4 oder in Richtung der Rohrleitung 3, gegen ein Setzen oder gegen ein Kriechen mit einer optionalen Sicherung 6, vorzugsweise in Form einer Kontermutter, gesichert oder sicherbar. Die Kontermutter ist vorzugsweise wie der Adapter 5 durch Verschrauben über ein zugeordnetes Innengewinde mit dem Außengewinde des Auslassstutzens 2b verbunden.

Bei der dargestellten Ausführungsform sitzt die Kontermutter auf dem zum Verbindungsstück 2c gerichteten Ende des Auslassstutzens 2b und grenzt ausschließlich an dem Adapter 5 und an den Auslassstutzen 2b an. Es sind jedoch auch andere konstruktive Lösungen möglich, insbesondere bei denen die Kontermutter zusammen mit dem Adapter 5 in die Armatur 4 verschraubt werden.

Bei der dargestellten Ausführungsform ist der Außendurchmesser der Kontermutter vorzugsweise kleiner als der Außendurchmesser des Adapters 5. Dies gewährleistet insbesondere, dass ein Verschrauben des Adapters 5 mit der Armatur 4 nicht durch die Kontermutter blockiert wird.

Zwischen dem Auslassstutzen 2b und dem Adapter 5 ist vorzugsweise eine Dichtung 7, insbesondere ein Gewindedichtring, angebracht.

Die Anschlusseinheit 2 und/oder der Adapter 5 weist bzw. weisen vorzugsweise eine umlaufende Vertiefung bzw. Aussparung, insbesondere eine umlaufende Nut 8 mit geeigneter Kontur und/oder Oberfläche, zur Aufnahme der Dichtung 7 bzw. des Gewindedichtrings auf.

Bei der dargestellten Ausführungsform weist vorzugsweise die äußere Seite bzw. das Außengewinde des Auslassstutzens 2b die umlaufende Nut 8 zur Aufnahme bzw. Lagerung der Dichtung 7 auf. Es sind jedoch auch andere konstruktive Lösungen möglich, insbesondere bei denen der Adapter 5 eine umlaufende Nut 8 aufweist.

Alternativ oder zusätzlich sind die Anschlusseinheit 2 und/oder der Adapter 5 auch mit Dichtungsband, Dichtungshanf o. dgl. abgedichtet oder abdichtbar.

Der Adapter 5 und die Sicherung 6 weisen auf der äußeren Seite, auf der sich auch das Außengewinde des Adapters 5 zur Verbindung mit der Armatur 4 befindet, jeweils eine, zwei oder mehr Schlüsselflächen 9 für ein nicht dargestelltes Werkzeug, insbesondere für einen Schraubenschlüssel, auf, die eine Montage, Demontage und/oder Justierung der Anschlussvorrichtung 1, insbesondere des Adapters 5 und/oder der Sicherung 6, ermöglichen, vereinfachen oder unterstützen. Es sind jedoch auch andere konstruktive Lösungen möglich, bei denen der Adapter 5 und/oder die Anschlusseinheit 2 und/oder die Sicherung 6, insbesondere die Kontermutter, eine oder mehrere Schlüsselflächen 9 für unterschiedliche Werkzeuge aufweist bzw. aufweisen.

Bei der dargestellten Ausführungsform in Fig. 1 ist der Adapter 5 derart auf den Auslassstutzen 2b der Anschlusseinheit 2 montiert bzw. verschraubt, dass er eine Verlängerung des Auslassstutzens 2b bzw. des Abstandes der Armatur 4 zur Rohrleitung 3 mit der Länge C bewirkt.

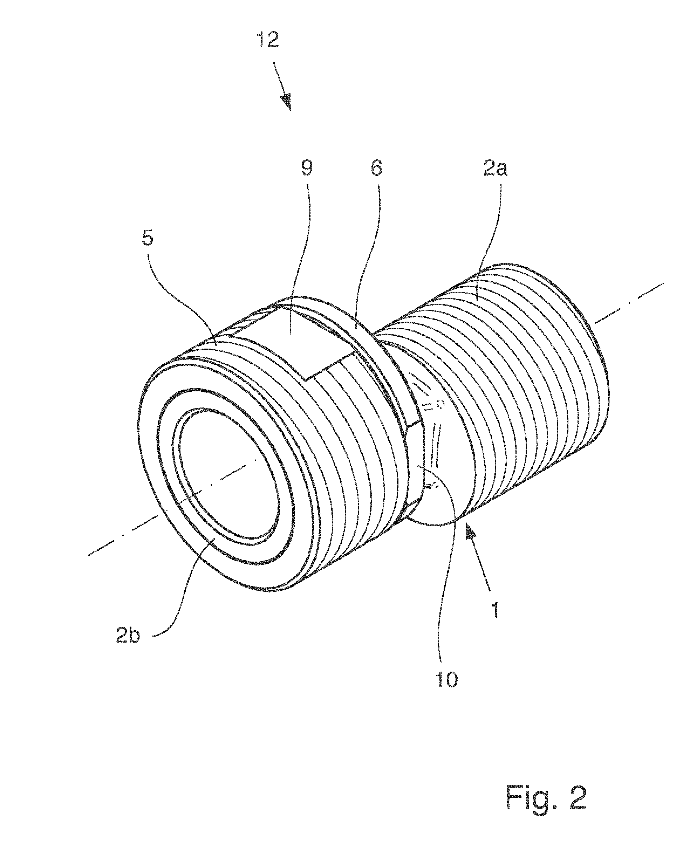

Fig. 2 zeigt eine perspektivische Ansicht der Anschlussvorrichtung 1 gemäß Fig. 1 mit dem Adapter 5 in einer neutralen Position und ohne Darstellung der zugeordneten Rohrleitung 3 sowie ohne die Armatur 4.

Der Adapter 5 befindet sich in der dargestellten Ausführungsform im Gegensatz zur Fig. 1 in einer neutralen Position. Der Auslassstutzen 2b wird folglich durch den Adapter 5 in dieser Position nicht verlängert, sodass der Abstand der Rohrleitung 3 zur Armatur 4 nicht vergrößert wird.

In der Fig. 2 sind darüber hinaus die Schlüsselflächen 9 und 10 für ein Werkzeug sowohl des Adapters 5 als auch der Sicherung 6 dargestellt.

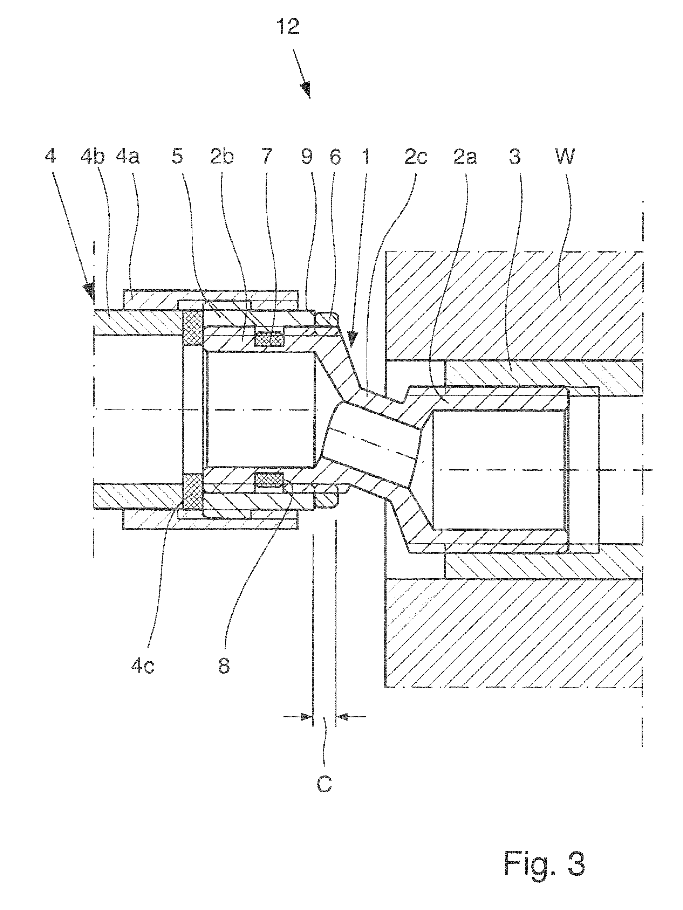

Fig. 3 zeigt einen schematischen Schnitt der Anschlussvorrichtung 1 gemäß Fig. 2 mit zugeordneter Armatur 4 sowie in der Wand W geführten Rohrleitung 3.

Bei der dargestellten Ausführungsform wird die neutrale Position des Adapters 5 mit denselben Bauteilen realisiert, mittels derer auch eine Verlängerung des Abstandes der Armatur 4 zur Rohrleitung 3 erzielt werden kann, wie in Fig. 1 dargestellt.

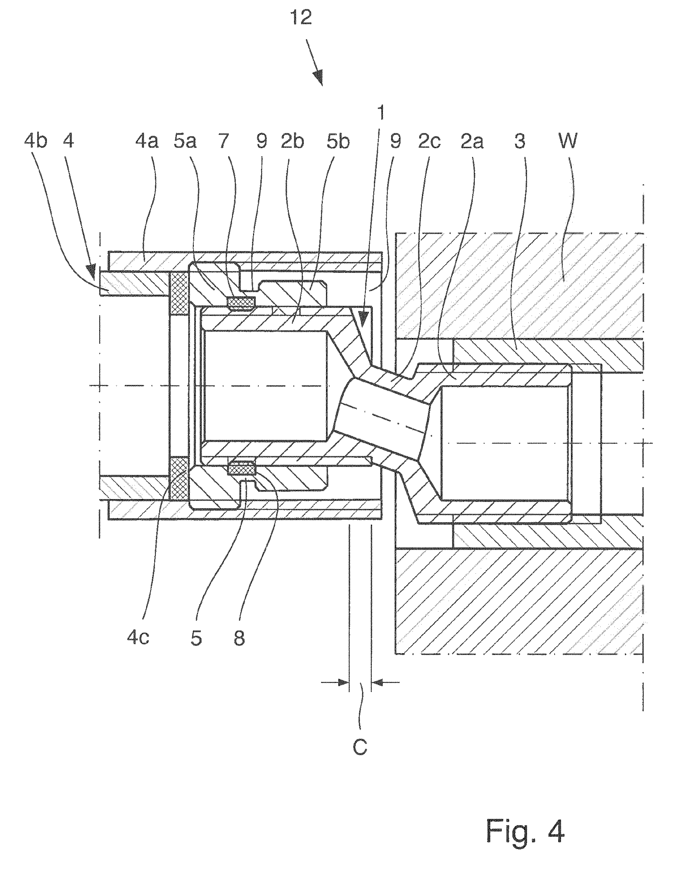

Fig. 4 zeigt einen schematischen Schnitt einer zweiten Ausführungsform der Anschlussvorrichtung 1 mit einem zweistufigen Adapter 5 in einer Position zur Verlängerung des Abstandes der Rohrleitung 3 zur nur ansatzweise dargestellten Armatur 4 um die Länge C.

Im Gegensatz zu der ersten Ausführungsform variiert der Außendurchmesser des dargestellten Adapters 5 über die Länge des Adapters 5. So weist der Adapter 5 vorzugsweise eine erste Verbindungsfläche 5a und eine zweite Verbindungsfläche 5b mit einem jeweils unterschiedlichen Außendurchmesser auf. Beide Verbindungsflächen 5a und 5b sind über ein Außengewinde mit der Armatur 4 verbindbar. Es sind jedoch auch andere konstruktive mehrstufige Lösungen mit mehr als zwei Verbindungsflächen möglich, die vorzugsweise nach der ansteigenden Größe der Außendurchmesser der Verbindungflächen über die Länge des Adapters 5 stufenartig angeordnet sind.

Bei der vorliegenden Ausführungsform ist der Außendurchmesser der Verbindungsfläche 5a größer als der Außendurchmesser der Verbindungsfläche 5b. Die Verbindungsfläche 5a ist mit der Armatur 4 verbunden bzw. verschraubt.

Die dargestellte Position bezweckt eine Verlängerung des Abstandes der Armatur 4 zur Rohrleitung 3.

Für Armaturen 4 mit kleineren Innendurchmessern wird vorzugsweise die Verbindungsfläche 5b verwendet, um diese mit der Anschlussvorrichtung 1 zu verbinden. Dabei ist der Adapter 5 vorzugsweise so anzuordnen, dass die Verbindungsfläche 5b der Armatur 4 zugewandt ist.

Bei der dargestellten Ausführungsform weist der Adapter 5 auf den Verbindungsflächen 5a und 5b und/oder dazwischen oder daneben eine oder mehrere Schlüsselflächen 9 für ein Werkzeug auf. Es sind jedoch auch andere konstruktive Lösungen möglich, bei denen die Schlüsselflächen 9 an anderen Stellen ausgebildet sind.

Im Gegensatz zu der in Fig. 1 bis 3 dargestellten Ausführungsform ist die umlaufende Nut 8 zur Lagerung bzw. Aufnahme der Dichtung 7 im Adapter 5 ausgebildet. Dies ermöglicht, dass insbesondere auch andere handelsübliche Anschlusseinheiten 2, insbesondere S-Anschlüsse, ohne bauliche Maßnahmen bzw. Veränderungen mit dem Adapter 5 kombiniert werden können.

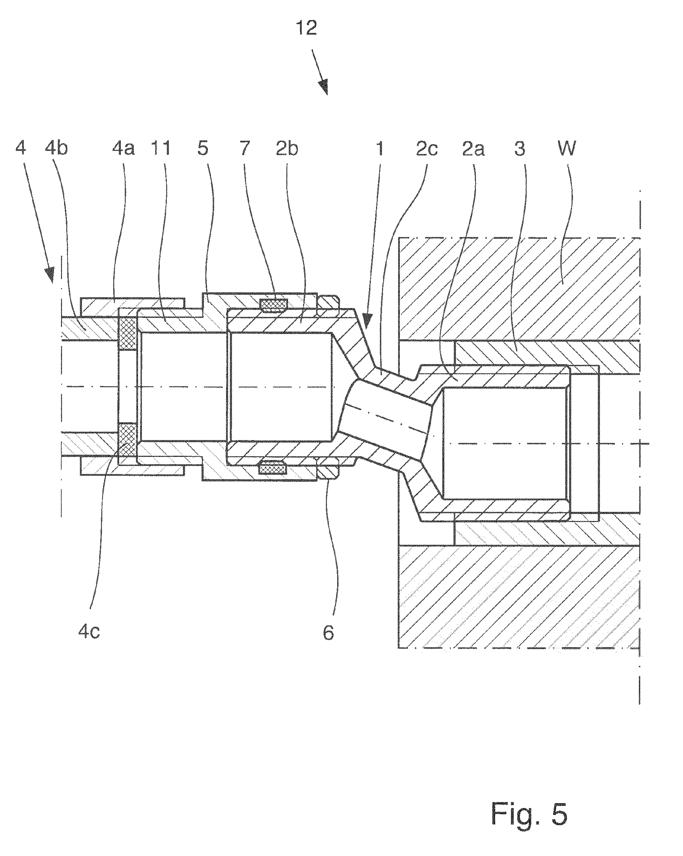

Fig. 5 zeigt einen schematischen Schnitt einer dritten Ausführungsform der vorschlagsgemäßen Anschlussvorrichtung 1 mit einem Adapter 5 zur Verlängerung des Abstandes der nur ansatzweise dargestellten Armatur 4 zur in der Wand W geführten Rohrleitung 3 gemäß einer dritten Ausführungsform.

Im Gegensatz zu den bisherigen Ausführungsformen ist der dargestellte Adapter 5 ausschließlich zur Verlängerung des Auslassstutzens 2b bzw. des Abstandes der Armatur 4 zur Rohrleitung 3 ausbildet.

Der dargestellte Adapter 5 ist über das Innengewinde des Adapters 5 mit dem Auslassstutzen 2b verbunden bzw. verschraubt und weist eine stufige Verjüngung 11 auf, die in die Armatur 4 verschraubt ist.

Die Verjüngung 11 ist vorzugsweise zur Verbindung mit der Armatur 4 ausgebildet und weist besonders bevorzugt den gleichen Außendurchmesser wie der Auslassstutzen 2b auf.

Durch die dargestellte Ausführungsform ist es möglich, insbesondere auch weitere handelsübliche S-Anschlüsse ohne bauliche Maßnahmen bzw. Änderungen mittels des Adapters 5 zu verbinden und den benötigten Abstand der Armatur 4 zur Rohrleitung 3 einzustellen.

Es sind jedoch auch andere konstruktive Lösungen möglich, bei denen der Adapter 5 in die Richtung zum Auslassstutzen 2b verjüngt ist und über das Außengewinde des Adapters 5 in den Auslassstutzen 2b hineingeschraubt wird. Eine solche alternative Ausführungsform resultiert in einer besonders platzsparenden und kompakten Anschlussvorrichtung 1.

Auch sind konstruktive Lösungen möglich, bei denen der Adapter 5 ein Außengewinde zur Verbindung mit der Anschlusseinheit 2 aufweist - der Adapter 5 folglich in den Einlassstutzen 2a oder in den Auslassstutzen 2b hinein geschraubt werden kann. Unabhängig davon kann die Verbindung des Adapters 5 mit der Rohrleitung 3 oder der Armatur 4 über ein Außengewinde oder über ein Innengewinde des Adapters 5 erfolgen.

Insbesondere können auch die Gewinde bzw. die Gewindekenngrößen, wie die Steigung, der Steigungswinkel, die Teilung oder die Flankenform, des Adapters 5 für die Verbindung mit der Rohrleitung 3 bzw. der Armatur 4 unterschiedlich sein zu den Gewinden bzw. Gewindekenngrößen des Adapters 5 zur Verbindung mit dem Einlassstutzen 2a bzw. dem Auslassstutzen 2b. Auch ist es möglich, dass die Gewinde des Adapters 5 unterschiedliche Drehrichtungen aufweisen. So kann das Innengewinde linksdrehend ausbildet sein, während das Außengewinde rechtsdrehend ist oder umgekehrt.

Vorzugsweise sind die Gewinde der Anschlussvorrichtung 1 als Rohrgewinde, insbesondere als zylindrische G-Innen- und/oder G-Außengewinde, besonders bevorzugt in den Größen G1/2 und/oder G3/4, ausgebildet.

Die Geometrie des Einlassstutzens 2a unterscheidet sich vorzugsweise von der Geometrie des Auslassstutzens 2b.

Die Anschlussvorrichtung 1 besteht vorzugsweise aus Messing.

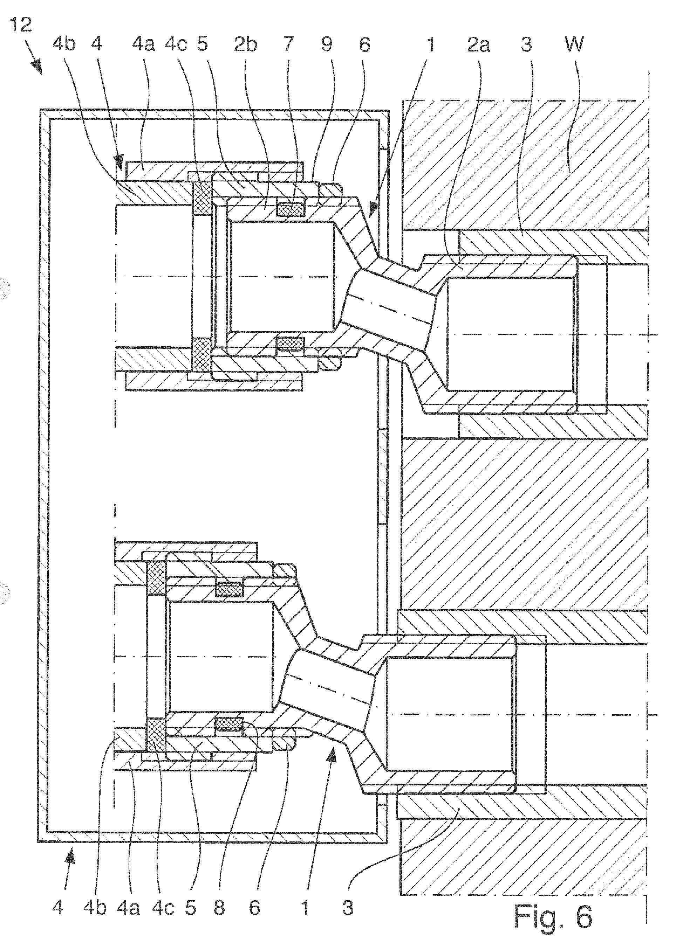

Fig. 6 zeigt einen schematischen Schnitt einer vorschlagsgemäßen sanitären Anlage 12 mit einer Armatur 4, zwei vorschlagsgemäßen Anschlussvorrichtungen 1 sowie zwei Rohrleitungen 3.

Die beispielhafte Ausführungsform der vorschlagsgemäßen sanitären Anlage 12 veranschaulicht, wie zwei axial versetzte Rohrleitungen 3 über zwei vorschlagsgemäße Anschlussvorrichtungen 1 an die Armatur 4 derart angeschlossen sind, dass die Armatur 4 trotz des axialen Versatzes der Rohrleitungen 3 bündig bzw. parallel zu der Wand W bzw. Oberfläche der Wand W ausgerichtet ist.

Bei der dargestellten Ausführungsform befindet sich der erste Adapter 5 vorzugsweise in einer Position zur Verlängerung des Abstandes der Armatur 4 zur ersten, insbesondere innerhalb der Wand W endende Rohrleitung 3 und der zweite Adapter 5 vorzugsweise in einer neutralen Position, in der der Abstand der Armatur 4 zur zweiten, insbesondere aus der Wand W hinausragenden Rohrleitung 3 weder verkürzt noch verlängert wird. Es sind jedoch auch andere konstruktive und/oder kombinatorische Lösungen möglich, bei denen beispielsweise beide Adapter 5 in einer insbesondere jeweils unterschiedlichen Position zur Verlängerung des Abstandes der Armatur 4 zu den Rohrleitungen 3 axial versetzt angebracht sind.

Einzelne Aspekte und Merkmale der verschiedenen Ausführungsformen können unabhängig voneinander, aber auch in beliebiger Kombination realisiert werden.

### Bezugszeichenliste:

- 1: Anschlussvorrichtung
- 2: Anschlusseinheit
- 2a: Einlassstutzen
- 2b: Auslassstutzen
- 2c: Verbindungsstück
- 3: Rohrleitung
- 4: Armatur
- 4a: Überwurfmutter
- 4b: Anschlussstück
- 4c: Dichtung (Armatur)
- 5: Adapter
- 5a: erste Verbindungsfläche
- 5b: zweite Verbindungsfläche
- 6: Sicherung
- 7: Dichtung (Anschlussvorrichtung)
- 8: Nut
- 9: Schlüsselfläche (Adapter)
- 10: Schlüsselfläche (Sicherung)
- 11: Verjüngung
- 12: Sanitäre Anlage

- C: Länge
- W: Wand

## Patentansprüche

1. Anschlussvorrichtung (1) mit einer Anschlusseinheit (2), die einen Einlassstutzen (2a) zum Anschluss an eine Rohrleitung (3) und einen Auslassstutzen (2b) zum Anschluss an eine Armatur (4) aufweist, wobei der Einlassstutzen (2a) über ein Verbindungsstück (2c) mit dem Auslassstutzen (2b) verbunden und versetzt ist,
**dadurch gekennzeichnet,**
**dass** die Anschlussvorrichtung (1) einen Adapter (5) aufweist, der an der Anschlusseinheit (2) zur Anpassung des Abstandes der Armatur (4) zur Rohrleitung (3) axial verstellbar angebracht oder anbringbar ist.

2. Anschlussvorrichtung nach Anspruch 1, **dadurch gekennzeichnet, dass** der Adapter (5) die Länge des Einlassstutzens (2a) oder des Auslassstutzens (2b) um maximal nahezu die gesamte Länge des Adapters (5) vergrößert.

3. Anschlussvorrichtung nach Anspruch 1 oder 2, **dadurch gekennzeichnet, dass** der Adapter (5) form- und/oder kraft- und/oder stoffschlüssig, insbesondere durch Verschrauben, mit der Anschlusseinheit (2), insbesondere mit dem Auslassstutzen (2b), oder mit der Armatur (4) verbunden oder verbindbar ist.

4. Anschlussvorrichtung nach einem der voranstehenden Ansprüche, **dadurch gekennzeichnet, dass** der Adapter (5) ein Innen- oder Außengewinde zur Verbindung mit der Anschlusseinheit (2) aufweist und/oder dass der Adapter (5) mit einem vorzugsweise im Wesentlichen durchgängigen Außengewinde oder mit einem Innengewinde mit der Armatur (4) verbunden oder verbindbar ist.

5. Anschlussvorrichtung nach einem der voranstehenden Ansprüche, **dadurch gekennzeichnet, dass** der Adapter (5) gegen ein axiales Verstellen mit einer Sicherung (6), insbesondere Kontermutter, gesichert oder sicherbar ist.

6. Anschlussvorrichtung nach einem der voranstehenden Ansprüche, **dadurch gekennzeichnet, dass** zwischen dem Adapter (5) und der Anschlusseinheit (2) eine Dichtung (7), insbesondere ein Dichtring, besonders bevorzugt ein Gewindedichtring, angebracht oder anbringbar ist.

7. Anschlussvorrichtung nach Anspruch 8, **dadurch gekennzeichnet, dass** der Adapter (5) und/oder die Anschlusseinheit (2) eine umlaufende Vertiefung bzw. Aussparung, insbesondere eine umlaufende Nut (8), zur Aufnahme bzw. Lagerung der Dichtung (7) aufweist bzw. aufweisen.

8. Anschlussvorrichtung nach einem der voranstehenden Ansprüche, **dadurch gekennzeichnet, dass** die Anschlussvorrichtung (1) vorzugsweise zur Montage bzw. Demontage oder zu ihrer Justierung außen eine oder mehrere Schlüsselflächen (9, 10) für ein Werkzeug, insbesondere einen Schraubenschlüssel, aufweist.

9. Anschlussvorrichtung nach einem der voranstehenden Ansprüche, **dadurch gekennzeichnet, dass** der Innen- oder Außendurchmesser des Adapters (5) - insbesondere zur optionalen Verbindung mit Rohrleitungen (3) bzw. Armaturen (4) mit unterschiedlichen Innen- bzw. Außendurchmessern - über die Länge des Adapters (5) variiert.

10. Anschlussvorrichtung nach einem der voranstehenden Ansprüche, **dadurch gekennzeichnet, dass** das Verbindungsstück (2c) den Einlassstutzen (2a) mit dem Auslassstutzen (2b) starr verbindet.

11. Anschlussvorrichtung nach einem der voranstehenden Ansprüche, **dadurch gekennzeichnet, dass** der Einlassstutzen (2a), der Auslassstutzen (2b) und das Verbindungsstück (2c) einstückig ausgebildet sind oder eine Baueinheit bilden.

12. Anschlussvorrichtung nach einem der voranstehenden Ansprüche, **dadurch gekennzeichnet, dass** die Anschlussvorrichtung (1) oder die Anschlusseinheit (2) als S-Anschluss ausgebildet ist und/oder dass die Anschlussvorrichtung (1) als Unterputzanschluss ausgebildet ist.

13. Anschlussvorrichtung nach einem der voranstehenden Ansprüche, **dadurch gekennzeichnet, dass** sich die Geometrie des Einlassstutzens (2a) von der Geometrie des Auslassstutzens (2b) unterscheidet.

14. Verwendung von zwei Anschlussvorrichtungen (1) für eine sanitäre Anlage (12) mit einer Armatur (4), insbesondere Mischbatterie, und zwei Rohrleitungen (3), wobei die Armatur (4) über die zwei Anschlussvorrichtungen (1) an die Rohrleitungen (3) angeschlossen ist,
**dadurch gekennzeichnet,**
**dass** die Anschlussvorrichtungen (1) gemäß einem der voranstehenden Ansprüche ausgebildet sind.

15. Verwendung nach Anspruch 14, **dadurch gekennzeichnet, dass** die Anschlussvorrichtungen (1) einen axialen und/oder radialen, insbesondere horizontalen, Versatz der Rohrleitungen (3) zueinander und/oder zu der Armatur (4) ausgleichen.
